# EUROPEAN PATENT SPECIFICATION

(11) **EP 4 303 276 B1**
(45) Date of publication and mention of the grant of the patent: **02.09.2026**
(21) Application number: 22763084.5
(22) Date of filing: 24.02.2022
(51) Int. Cl.: C09D 5/16, C09D 133/14, C09D 7/61, C09D 7/63

(54) **ANTIFOULING COATING MATERIAL COMPOSITION**
ANTIFOULING-BESCHICHTUNGSMATERIALZUSAMMENSETZUNG
COMPOSITION DE MATÉRIAU DE REVÊTEMENT ANTISALISSURE

(30) Priority: 02.03.2021 JP 2021032962
(43) Date of publication of application: 10.01.2024
(73) Proprietor: Nitto Kasei Co., Ltd., Osaka-shi Osaka 533-0031 (JP)
(72) Inventor: MATSUKI, Takashi, Osaka-shi, Osaka 533-0031 (JP); KITAMURA, Hitoshi, Osaka-shi, Osaka 533-0031 (JP); WAKU, Hidenori, Osaka-shi, Osaka 533-0031 (JP); OKA, Nagato, Osaka-shi, Osaka 533-0031 (JP); YASUI, Takuya, Osaka-shi, Osaka 533-0031 (JP); ITO, Motomichi, Osaka-shi, Osaka 533-0031 (JP)
(74) Representative: Gulde & Partner
(86) International application number: PCT/JP2022/007517
(87) International publication number: WO 2022/186028

(56) References cited:
- WO-A1-03/080747
- WO-A1-2018/087846
- WO-A1-2020/045211
- WO-A1-2023/145634
- JP-A- 2018 080 275
- JP-A- 2020 152 807
- ROONEY THOMAS R. ET AL: "Polylactic acid macromonomer radical propagation kinetics and degradation behaviour", vol. 2, no. 4, 1 January 2017 (2017-01-01), pages 487 - 497, XP093183570, ISSN: 2058-9883, Retrieved from the Internet <URL:https://pubs.rsc.org/en/content/articlepdf/2017/re/c7re00019g> [retrieved on 20240709], DOI: 10.1039/C7RE00019G
- ROONEY THOMAS R. ET AL: "Polyester Macromonomer Syntheses and Radical Copolymerization Kinetics with Styrene", MACROMOLECULES, vol. 50, no. 3, 18 January 2017 (2017-01-18), US, pages 784 - 795, XP055930571, ISSN: 0024-9297, DOI: 10.1021/acs.macromol.6b02297

## Description

### TECHNICAL FIELD

The present invention relates to an antifouling coating composition.

### BACKGROUND ART

Aquatic fouling organisms such as barnacles, tubeworms, common mussels, *Bugula neritina,* sea squirts, green laver, sea lettuce, and slimes adhere to ships (especially, on the bottom of ships), fishing tools such as fishing nets and fishing net accessories, and underwater structures such as power plant aqueducts, thereby causing problems such as impaired functionality and appearance of the ships and the like.

In order to prevent such problems, there are known techniques in which an antifouling coating composition is applied onto a ship or the like to form an antifouling coating film such that an antifouling agent is gradually released from the antifouling coating film, which allows antifouling performance to be exhibited over a long period of time, as can be seen in JP-B-S63-61989, JP-A-2003-119420, JP-A-2003-119419 or JP-A-2002-3776.

However, the antifouling coating films comprising (meth)acrylic acid alkoxycarbonylmethyl ester group-containing polymer disclosed in JP-B-S63-61989, JP-A-2003-119420, JP-A-2003-119419 or JP-A-2002-3776 are difficult to exhibit antifouling property over a long period of time due to its extremely low coating film dissolubility.

In order to solve these problems, there has been proposed a technique for dissolving and allowing the coating film to exhibit antifouling performance over a long period of time, e.g. in WO 2020/045211 A1.

### SUMMARY OF INVENTION

### TECHNICAL PROBLEM

Although the antifouling coating film comprising the antifouling coating composition disclosed in WO 2020/045211 A1 has improved coating film dissolubility, there is still room for improvement in terms of being capable of maintaining excellent antifouling performance over a long period of time, and an antifouling coating composition that solves these problems has been desired.

The present invention has been made in view of such circumstances, and provides an antifouling coating composition capable of maintaining excellent antifouling performance over a long period of time.

### SOLUTION TO PROBLEM

According to the present invention, there is provided an antifouling coating composition comprising a copolymer A and an antifouling agent B, wherein the copolymer A is a copolymer of a monomer (a) and an ethylenically unsaturated monomer (b) other than the monomer (a), the monomer (a) is represented by general formula (1), the antifouling agent B comprises an antifouling agent B2, and the antifouling agent B2 is 4-[1-(2,3-dimethylphenyl)ethyl]-1H-imidazole.

As a result of diligent research to solve the above problems, the present inventors have found that the above antifouling coating composition can solve the above problems and have completed the present invention.

### DESCRIPTION OF EMBODIMENTS

The present invention will be described in detail below.

The present disclosure relates to an Antifouling Coating Composition. The antifouling coating composition of the present invention contains a copolymer A and an antifouling agent B.

### 1-1. Copolymer A

### 1-1-1. Copolymer A

The copolymer A is a copolymer of a monomer (a) and an ethylenically unsaturated monomer (b) other than the monomer (a). The copolymer A contains monomer units derived from the monomers (a) and (b). The content of the monomer (a) with respect to the total of the monomer (a) and the monomer (b) is preferably 10 to 90% by mass, and still more preferably 20 to 70% by mass. Specifically, the content thereof is, for example, 10, 15, 20, 25, 30, 35, 40, 45, 50, 55, 60, 65, 70, 75, 80, 85, or 90% by mass, and may be within the range between any two numerical values exemplified here. In this case, the coating film dissolubility is particularly good.

### <Monomer (a)>

The monomer (a) is represented by general formula (1). 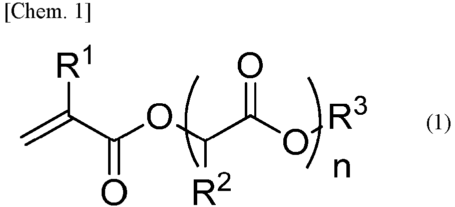 wherein R¹ represents hydrogen, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 2 to 10.

R² is preferably hydrogen or a methyl group.

The number of carbon atoms in the alkoxy group or alkyl group of R³ is, for example, 1, 2, 3, 4, 5, 6, 7, or 8, and may be within the range between any two numerical values exemplified here. R³ is, for example, a methyl group, an ethyl group, a n-propyl group, an isopropyl group, a n-butyl group, a t-butyl group, a 2-ethylhexyl group, a cyclohexyl group, a benzyl group, a phenyl group, a 2-methoxyethyl group, a 4-methoxybutyl group, a vinyl group, or an allyl group, and is preferably a methyl group, an ethyl group, an isopropyl group, or a n-butyl group.
n represents an integer of 2 to 10, and preferably 2 to 6, from the viewpoint of long-term antifouling property. n is, for example, 2, 3, 4, 5, 6, 7, 8, 9, or 10, and may be within the range between any two numerical values exemplified here.

Examples of the monomer (a) include poly(oxycarbonylmethyl) methyl acrylate, poly(oxycarbonylmethyl) ethyl acrylate, poly(oxycarbonylmethyl) isopropyl acrylate, poly(oxycarbonylmethyl) n-propyl acrylate, poly(oxycarbonylmethyl) n-butyl acrylate, poly(oxycarbonylmethyl) t-butyl acrylate, poly(oxycarbonylmethyl) 2-ethylhexyl acrylate, poly(oxycarbonylmethyl) cyclohexyl acrylate, poly(oxycarbonylmethyl) benzyl acrylate, poly(oxycarbonylmethyl) phenyl acrylate, poly(oxycarbonylmethyl) 2-methoxyethyl acrylate, poly(oxycarbonylmethyl) 4-methoxybutyl acrylate, poly(oxycarbonylmethyl) allyl acrylate, poly(oxycarbonylmethyl) vinyl acrylate, poly[1-(oxypolycarbonyl)ethyl] methyl acrylate, poly[1-(oxypolycarbonyl)ethyl] ethyl acrylate, poly[1-(oxypolycarbonyl)ethyl] n-propyl acrylate, poly[1-(oxypolycarbonyl)ethyl] isopropyl acrylate, poly[1-(oxypolycarbonyl)ethyl] n-butyl acrylate, poly[1-(oxypolycarbonyl)ethyl] t-butyl acrylate, poly[α-(oxycarbonyl)benzyl] methyl acrylate, and poly[α-(oxycarbonyl)benzyl] ethyl acrylate. Preferred examples thereof include poly(oxycarbonylmethyl) methyl acrylate, poly(oxycarbonylmethyl) ethyl acrylate, poly(oxycarbonylmethyl) isopropyl acrylate, poly(oxycarbonylmethyl) n-propyl acrylate, poly(oxycarbonylmethyl) n-butyl acrylate, poly[1-(oxypolycarbonylethyl)] methyl acrylate, and poly[1-(oxypolycarbonylethyl)] ethyl acrylate. These monomers (a) may be used singly, or two or more thereof may be used in combination.

The monomer (a) preferably contains a monomer represented by general formula (1) in which n is 2 and a monomer represented by general formula (1) in which n is 3 to 10, and the mass ratio (n(2)/n(2 to 10)) in terms of solid content is preferably 0.4 to 0.8, and more preferably 0.5 to 0.7. In this case, it is preferable from the viewpoint of coating film dissolubility and coating film property. Specifically, the value is, for example, 0.40, 0.45, 0.50, 0.55, 0.60, 0.65, 0.70, 0.75, or 0.80, and may be within the range between any two numerical values exemplified here.

### <Monomer (b)>

The monomer (b) is an ethylenically unsaturated monomer other than the monomer (a), and examples thereof include (meth)acrylic acid esters, vinyl compounds, aromatic compounds and dialkyl ester compounds of dibasic acids. As used herein, (meth)acrylic acid esters mean acrylic acid esters or methacrylic acid esters.

Examples of the (meth)acrylic acid esters include a monomer (bx) represented by the following general formula (2) and other (meth)acrylic acid esters. 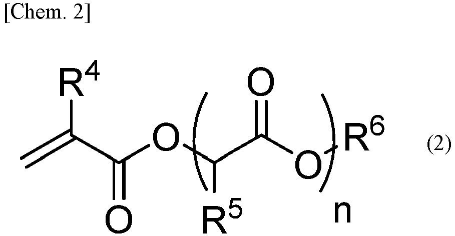 wherein R⁴ represents a methyl group, R⁵ represents hydrogen, a methyl group, or a phenyl group, R⁶ is an alkyl group having 1 to 8 carbon atoms optionally substituted with an alkoxy group having 1 to 8 carbon atoms or a phenyl group, or represents a phenyl group, and n represents an integer of 2 to 10.

The descriptions of R⁵, R⁶, and n are the same as the descriptions of R¹, R², and n in general formula (1).

The content of the monomer (bx) with respect to the total of the monomer (a) and the monomer (b) is 0 to 30% by mass, preferably 0 to 10% by mass, and still more preferably 0 to 5% by mass. Specifically, the content of the monomer (bx) is, for example, 0, 1, 2, 3, 4, 5, 10, 15, 20, 25, or 30% by mass, and may be within the range between any two numerical values exemplified here.

Also, examples of the other (meth)acrylic acid ester include (meth)acrylic acid esters, such as methyl (meth)acrylate, ethyl (meth)acrylate, butyl (meth)acrylate, isobutyl (meth)acrylate, t-butyl (meth)acrylate, 2-ethylhexyl (meth)acrylate, lauryl (meth)acrylate, 2-methoxyethyl (meth)acrylate, 2-methoxypropyl (meth)acrylate, 4-methoxybutyl (meth)acrylate, benzyl (meth)acrylate, phenyl (meth)acrylate, 2-ethoxyethyl (meth)acrylate, propylene glycol monomethyl (meth)acrylate, 2-hydroxyethyl (meth)acrylate, 2-hydroxypropyl (meth)acrylate, glycidyl (meth)acrylate, furfuryl (meth)acrylate, tetrahydrofurfuryl (meth)acrylate, dimethylaminoethyl (meth)acrylate, diethylaminoethyl (meth)acrylate, 2-[2-(2-hydroxyethoxy)ethoxy]ethoxy]ethyl methacrylate, mono(2-(meth)acryloyloxyethyl) succinate, N-(3-dimethylaminopropyl) (meth)acrylamide, 2-hydroxyethyl (meth)acrylate, 2-[2-(2-methoxyethoxy)ethoxy]ethyl (meth)acrylate, and N,N'-dimethyl (meth)acrylamide; (meth)acrylic acid alkoxycarbonylmethyl esters, such as methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, t-butoxycarbonylmethyl (meth)acrylate, 2-ethylhexyloxycarbonylmethyl (meth)acrylate, cyclohexyloxycarbonylmethyl (meth)acrylate, benzyloxycarbonylmethyl (meth)acrylate, phenoxycarbonylmethyl (meth)acrylate, 2-methoxyethoxycarbonylmethyl (meth)acrylate, 4-methoxybutoxycarbonylmethyl (meth)acrylate, allyloxycarbonylmethyl (meth)acrylate, vinyloxycarbonylmethyl (meth)acrylate, 1-(methoxycarbonyl)ethyl (meth)acrylate, 1-(ethoxycarbonyl)ethyl (meth)acrylate, 1-(n-propoxycarbonyl)ethyl (meth)acrylate, 1-(isopropoxycarbonyl)ethyl (meth)acrylate, 1-(n-butoxycarbonyl)ethyl (meth)acrylate, 1-(t-butoxycarbonyl)ethyl (meth)acrylate, α-(methoxycarbonyl)benzyl (meth)acrylate, and α-(ethoxycarbonyl)benzyl (meth)acrylate; and
(meth)acrylic acid silyl esters such as triisopropylsilyl (meth)acrylate, triisobutylsilyl (meth)acrylate, tri-s-butylsilyl (meth)acrylate, triisopentylsilyl (meth)acrylate, triphenylsilyl (meth)acrylate, diisopropylphenylsilyl (meth)acrylate, diisopropylisobutylsilyl (meth)acrylate, diisopropyl s-butylsilyl (meth)acrylate, diisopropylisopentylsilyl (meth)acrylate, isopropyl diisobutylsilyl (meth)acrylate, isopropyl di-s-butylsilyl (meth)acrylate, t-butyl diisobutylsilyl (meth)acrylate, t-butyl diisopentylsilyl (meth)acrylate, t-butyl diphenylsilyl (meth)acrylate, diisopropylhexylsilyl (meth)acrylate, diisopropylcyclohexylsilyl (meth)acrylate, tricyclohexylsilyl (meth)acrylate, tri-1,1-dimethylpentylsilyl (meth)acrylate, tri-2,2-dimethylpropylsilyl (meth)acrylate, tricyclohexylmethylsilyl (meth)acrylate, diisopropylcyclohexylmethylsilyl (meth)acrylate, tri-2-ethylhexylsilyl (meth)acrylate, and tri-2-propylpentylsilyl (meth)acrylate.

Examples of the vinyl compounds include vinyl compounds having a functional group, such as vinyl chloride, vinylidene chloride, acrylonitrile, methacrylonitrile, vinyl acetate, vinyl benzoate, vinyl butyrate, butyl vinyl ether, lauryl vinyl ether, and N-vinylpyrrolidone.

Examples of the aromatic compounds include styrene, vinyltoluene, and α-methylstyrene.

Examples of the dialkyl ester compounds of dibasic acids include dimethyl maleate, dibutyl maleate, and dimethyl fumarate.

In the present invention, these monomers (b) may be used singly, or two or more thereof may be used in combination. In particular, as the monomer (b), from the viewpoint of coating film dissolubility and coating film property, preferred are (meth)acrylic acid esters; from the viewpoint of crack resistance in particular, more preferred are methyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, 2-hydroxyethyl (meth)acrylate, glycidyl (meth)acrylate, furfuryl (meth)acrylate, tetrahydrofurfuryl (meth)acrylate and the like; and from the viewpoint of coating film dissolubility, more preferred are triisopropylsilyl (meth)acrylate, t-butyldiphenylsilyl (meth)acrylate, tri-2-ethylhexylsilyl (meth)acrylate and the like.

### 1-1-2. Physical Properties and Production Method of Copolymer A

The weight-average molecular weight (Mw) of the copolymer A is preferably 5,000 to 300,000. When the molecular weight is less than 5,000, the coating film formed of the antifouling coating material becomes fragile and easily peels off or cracks, and when the molecular weight exceeds 300,000, the viscosity of the polymer solution increases and handling becomes difficult. Specifically, the Mw is, for example, 5,000, 10,000, 20,000, 30,000, 40,000, 50,000, 60,000, 70,000, 80,000, 90,000, 100,000, 200,000, or 300,000, and may be within the range between any two numerical values exemplified here.

Examples of the method for measuring Mw include gel permeation chromatography (GPC method).

The copolymer A may be a random copolymer, an alternating copolymer, a periodic copolymer, or a block copolymer of the monomer (a) and the monomer (b).

The copolymer A may be obtained, for example, by polymerizing the monomer (a) and the monomer (b) in the presence of a polymerization initiator.

Examples of the polymerization initiator include azo compounds such as 2,2'-azobisisobutyronitrile, 2,2'-azobis(2-methylbutyronitrile), 2,2'-azobis(2,4-dimethylvaleronitrile), dimethyl-2,2'-azobisisobutyrate, dimethyl-2,2'-azobisisobutyrate, and 2,2'-azobis(N-butyl-2-methylpropionamide); peroxides such as benzoyl peroxide, di-tert-butyl peroxide, tert-butyl peroxybenzoate, tert-butyl peroxyisopropyl carbonate, t-butyl peroxy-2-ethylhexanoate, t-hexylperoxy-2-ethylhexanoate, di-t-hexyl peroxide, t-butylperoxy-2-ethylhexyl monocarbonate, di-t-butyl peroxide, 1,1,3,3-tetramethylbutylperoxyneodecanoate, t-amylperoxyneodecanoate, t-hexylperoxypivalate, t-amylperoxypivalate, and 1,1,3,3-tetramethylbutylperoxy-2-ethylhexanoate. These polymerization initiators may be used singly, or two or more thereof may be used in combination. Particularly preferred as the polymerization initiator are 2,2'-azobisisobutyronitrile, 2,2'-azobis(2-methylbutyronitrile), 2,2'-azobis(2,4-dimethylvaleronitrile), dimethyl 2,2'-azobisisobutyrate, and 1,1,3,3-tetramethylbutylperoxy-2-ethylhexanoate. The amount of the polymerization initiator used may be set as appropriate to adjust the molecular weight of the copolymer A.

Examples of the polymerization method include solution polymerization, bulk polymerization, emulsion polymerization, suspension polymerization, and non-aqueous dispersion polymerization. Among these, solution polymerization or non-aqueous dispersion polymerization is particularly preferred in that the copolymer A simply and accurately can be obtained therethrough.

In the polymerization reaction, an organic solvent may be used as necessary. Examples of the organic solvent include, but are not limited to, aromatic hydrocarbon solvents such as xylene and toluene; aliphatic hydrocarbon solvents; ester solvents such as ethyl acetate, butyl acetate, isobutyl acetate, methoxy propyl acetate, and propylene glycol 1-monomethyl ether 2-acetate; alcohol solvents such as isopropyl alcohol, butyl alcohol, and propylene glycol monomethyl ether; ether solvents such as dioxane, diethyl ether, and dibutyl ether; and ketone solvents such as methyl ethyl ketone and methyl isobutyl ketone.

Among these, preferred are butyl acetate, isobutyl acetate, butyl alcohol, propylene glycol monomethyl ether, propylene glycol 1-monomethyl ether 2-acetate, toluene, and xylene. These solvents may be used singly, or two or more thereof may be used in combination.

The reaction temperature in the polymerization reaction may be set as appropriate according to the type of the polymerization initiator and the like, and is usually 50 to 160°C, preferably 60 to 150°C.

The polymerization reaction is preferably carried out under an inert gas atmosphere such as nitrogen gas or argon gas.

### 1-2. Antifouling Agent B

The antifouling agent B contains an antifouling agent B2. The antifouling agent B2 is 4-[1-(2,3-dimethylphenyl)ethyl]-1H-imidazole (generic name: medetomidine).

An antifouling agent B1 is 2-(p-chlorophenyl)-3-cyano-4-bromo-5-trifluoromethylpyrrole (generic name: Econea 28).

The content of the antifouling agent B1 in the composition of the present invention is not particularly limited, but is usually 0.1 to 15% by mass, preferably 0.5 to 10% by mass, and still more preferably 1 to 7% by mass, in terms of solid content. Specifically, the content is, for example, 0.1, 0.5, 1, 2, 3, 4, 5, 6, 7, 8, 9, 10, 11, 12, 13, 14, or 15% by mass, and may be within the range between any two numerical values exemplified here.

The content of the antifouling agent B2 in the composition of the present invention is not particularly limited, but is usually 0.01 to 5% by mass, preferably 0.05 to 3% by mass, and still more preferably 0.1 to 0.3% by mass, in terms of solid content. Specifically, the content is, for example, 0.01, 0.05, 0.1, 0.2, 0.3, 0.5, 1, 2, 3, 4, or 5% by mass, and may be within the range between any two numerical values exemplified here.

The antifouling agent B may also contain other antifouling agents, such as the following inorganic agents and organic agents:
Examples of inorganic chemicals include cuprous oxide, copper thiocyanate (generic name: copper rhodanide), and copper powder. Among these, preferred are cuprous oxide and copper rhodanide, and more preferred is cuprous oxide surface-treated with glycerin, sucrose, stearic acid, lauric acid, lecithin, mineral oil and the like in view of long-term stability during storage.

Examples of organic agents include copper 2-mercaptopyridine-N-oxide (generic name: copper pyrithione), zinc 2-mercaptopyridine-N-oxide (generic name: zinc pyrithione), zinc ethylene-bis-dithiocarbamate (generic name: Zineb), 4,5-dichloro-2-n-octyl-3-isothiazolone (generic name: SEA-NINE 211), 3,4-dichlorophenyl-N,N-dimethylurea (generic name: Diuron), and 2-methylthio-4-t-butylamino-6-cyclopropylamino-s-triazine (generic name: Irgarol 1051).

The content of other antifouling agents in the composition of the present invention is not particularly limited, but is usually 0.1 to 60.0% by mass, in terms of solid content. The content of the antifouling agent is, for example, 0.1, 0.5, 1, 2, 3, 4, 5, 6, 7, 8, 9, 10, 15, 20, 25, 30, 35, 40, 45, 50, 55, or 60% by mass, and may be within the range between any two numerical values exemplified here.

From the viewpoint of antifouling performance in the immersion test after the weather resistance test, the antifouling agent B contains the antifouling agent B2; particularly preferably has any of the following characteristics:
- containing both the antifouling agent B1 and the antifouling agent B2; and
- containing one or both of the antifouling agent B1 and the antifouling agent B2, and cuprous oxide.

### 1-3. Other additives

If necessary, a resin component other than the copolymer A, a release modifier, a plasticizer, a fibre, a pigment, a dye, an antifoaming agent, a dehydrating agent, a thixotropic agent, an organic solvent, or the like may be further added to the resin for the antifouling coating material of the present invention to obtain the antifouling coating material.

Examples of the other resin component include a polymer P.

The polymer P is a polymer obtained by polymerizing the monomer (b). The monomer (b) is any ethylenically unsaturated monomer other than the monomer (a). The monomer (b) used for the polymerization of the polymer P may have the same compositional feature or different compositional features as the monomer (b) used for the polymerization of the copolymer A.

In the present invention, these monomers (b) may be used singly, or two or more thereof may be used in combination. In particular, from the viewpoint of compatibility with the copolymer A, preferred are methyl (meth)acrylate, ethyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, furfuryl (meth)acrylate, tetrahydrofurfuryl (meth)acrylate, benzyl (meth)acrylate, triisopropylsilyl (meth)acrylate, t-butyldiphenylsilyl (meth)acrylate, tri-2-ethylhexylsilyl (meth)acrylate and the like.

The polymerization method, initiator, solvent, temperature, other conditions, Mw measurement method, and the like may be applied to the method described above for the copolymer A.

The content of the polymer P in the composition of the present invention is not particularly limited, but the mass ratio (polymer P/copolymer A) as the content ratio with respect to the copolymer A is usually 0.1 to 0.5, and preferably 0.1 to 0.3, in terms of solid content.

Examples of the release modifier include rosin, rosin derivative, monocarboxylic acid and salts thereof, such as naphthenic acid, cycloalkenyl carboxylic acid, bicycloalkenyl carboxylic acid, versatic acid, trimethyl isobutenyl cyclohexene carboxylic acid, and metal salts thereof, and alicyclic hydrocarbon resins described above. These may be used singly or in combination of two or more thereof.

Examples of the rosin derivative include hydrogenated rosin, disproportionated rosin, maleated rosin, formylated rosin, and polymerized rosin.

Examples of the alicyclic hydrocarbon resin include commercially available products such as Quintone 1500, 1525L, and 1700 (product names, manufactured by Zeon Corporation).

Among these, preferred are rosin, rosin derivatives, naphthenic acid, versatic acid, trimethylisobutenylcyclohexenecarboxylic acid, and metal salts thereof.

Examples of the plasticizer include phosphate esters, phthalate esters, adipate esters, sebacate esters, polyesters, epoxidized soybean oil, alkyl vinyl ether polymer, polyalkylene glycols, t-nonyl pentasulfide, vaseline, polybutene, tris(2-ethylhexyl) trimellitate, silicone oil, and chlorinated paraffin. These may be used singly or in combination of two or more thereof.

Examples of the fibre include mineral fibres such as mineral-glass fibres, wollastonite fibres, montmorillonite fibres, tobermorite fibres, atapulgite fibres, calcined bauxite fibres, volcanic rock fibres, bauxite fibres, rockwool fibres, and processed mineral fibres from mineral wool. These may be used singly or in combination of two or more thereof.

Examples of the dehydrating agent include calcium sulfate, synthetic zeolite adsorbents, orthoesters, silicates such as tetramethoxysilane and tetraethoxysilane, isocyanates, carbodiimides, and carbodiimidazoles. These may be used singly, or two or more thereof may be used in combination.

### 2. Method for Producing Antifouling Coating Composition

The antifouling coating composition of the present invention may be produced, for example, by mixing and dispersing a mixed solution containing the copolymer A, the antifouling agent B, other additives, and the like using a disperser. The antifouling agent B may also be produced by mixing and dispersing a mixed solution containing the copolymer A, other additives, and the like using a disperser, and then adding the antifouling agent B thereto.

The mixed solution is preferably prepared by dissolving or dispersing various materials such as the copolymer A and the antifouling agent B in a solvent. The same organic solvents as described above may be used as the aforementioned solvents.

A disperser that may be used as a fine pulverizer may be suitably used, for example, as the disperser. For example, commercially available homomixers, sand mills, bead mills, dispersers, paint shakers or the like may be used. Alternatively, glass beads or the like for mixing and dispersing may be charged into a container equipped with a stirrer and used for mixing and dispersing the mixed solution.

### 3. Method for Antifouling Treatment, Antifouling Coating Film, and Coated Article

In the antifouling treatment method of the present invention, an antifouling coating film is formed on the surface of an object to be coated with the above antifouling coating composition. According to the antifouling treatment method of the present invention, the antifouling coating film gradually dissolves from the surface and the coating film surface is constantly renewed, thereby preventing adhesion of aquatic fouling organisms.

Examples of the object to be coated include ships (in particular, ship bottoms), fishing tools, and underwater structures.

The thickness of the antifouling coating film may be set as appropriate according to the type of object to be coated, sailing speed of the ship, seawater temperature, and the like. For example, in a case where the object to be coated is the bottom of a ship, the thickness of the antifouling coating film is usually 50 to 700 µm, and preferably 100 to 600 µm.

### EXAMPLES

The features of the present invention will be further clarified by Examples and the like to be described below. The present invention, however, is not limited to these Examples and the like. Examples 6, 7 and 13 are not falling under the protection scope of the present disclosure.

In each of Production Examples, Examples, and Comparative Examples, "%" represents "% by mass". The weight-average molecular weight (Mw) is a value obtained by GPC (polystyrene equivalent). The conditions for GPC were as follows.
Equipment: HLC-8220GPC manufactured by Tosoh Corporation
Column: TSKgel SuperHZM-M × 2
Flow rate: 0.35 mL/min
Detector: RI
Column thermostatic bath temperature: 40°C
Eluent: THF

The non-volatile matter is a value measured in accordance with JIS K 5601-1-2:1999 (ISO 3251:1993) "Testing Methods for Paint Components: Determination Of Non-Volatile matter".

### <Production Example 1 (Production of Monomer a1)>

### (First Reaction)

Into a four-necked flask equipped with a thermometer, a condenser, and a stirrer, 215 g (1.85 mol) of sodium monochloroacetate, 201 g (1.85 mol) of methyl chloroacetate, and 300 g of N-methyl-2-pyrrolidone were charged, and the mixture was stirred at 70 to 80°C for 6 hours. After completion of the reaction, 500 ml of toluene was added to the reaction solution, and the organic layer was washed with water, hydrochloric acid water, and sodium bicarbonate water in this order, and then the solvent was removed by concentration under reduced pressure to give 262 g of methyl methoxycarbonyl methyl chloroacetate.

### (Second Reaction)

Subsequently, into a four-necked flask equipped with a thermometer, a condenser, a stirrer, and a dropping funnel, 200 g (1.20 mol) of methoxycarbonyl methyl chloroacetate, which is the product of the first reaction, 87 g (1.20 mol) of acrylic acid, 0.1 g of 4-methoxyphenol, and 500 g of ethyl acetate were charged, and 122 g (1.20 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with water, hydrochloric acid water, and sodium bicarbonate water in this order, and the solvent was removed by concentration under reduced pressure to give 230.6 g of a monomer a1.

### <Production Examples 2 to 20 (Production of Monomers a2 to a10 and Monomers b1 to b10)>

Monomers a2 to a10 and monomers b1 to b10 were obtained by performing reactions in the same manner as in Production Example 1 using the raw materials shown in Table 1. The reaction conditions and yields are shown in Table 1.

**[Table 1]**

| Table 1 | | | | | | First reaction | | | | | Second reaction | | | | | | |
|---|---|---|---|---|---|---|---|---|---|---|---|---|---|---|---|---|---|
| | | | | | | Raw material (g) | | | | Intermediate | Raw material (g) | | | | | | Yield |
| Production Example | Monomer | R1 | R2 | R3 | n | CANa | CAMe | CAEt | NMP | Yield (g) | Intermediate | AA | MAA | TEA | Ethyl acetate | MEHQ | (g) |
| 1 | a1 | H | H | Me | 2 | 215 | 201 | | 300 | 262 | 200 | 87 | | 122 | 500 | 0.1 | 230.6 |
| 2 | a2 | H | H | Et | 2 | 199 | | 209 | 300 | 269 | 200 | 80 | | 112 | 500 | 0.1 | 227.5 |
| 3 | a3 | H | H | Me | 3 | 321 | 150 | | 300 | 260 | 200 | 64 | | 90 | 500 | 0.1 | 220.1 |
| 4 | a4 | H | H | Et | 3 | 305 | | 160 | 300 | 266 | 200 | 60 | | 85 | 500 | 0.1 | 218.3 |
| 5 | a5 | H | H | Me | 4 | 384 | 119 | | 300 | 261 | 200 | 51 | | 72 | 500 | 0.1 | 232.8 |
| 6 | a6 | H | H | Et | 4 | 349 | | 123 | 300 | 252 | 200 | 49 | | 68 | 500 | 0.1 | 193.6 |
| 7 | a7 | H | H | Me | 5 | 419 | 98 | | 300 | 258 | 200 | 42 | | 59 | 500 | 0.1 | 208.8 |
| 8 | a8 | H | H | Et | 5 | 373 | | 98 | 300 | 241 | 200 | 41 | | 57 | 500 | 0.1 | 177.0 |
| 9 | a9 | H | H | Me | 6 | 437 | 81 | | 300 | 251 | 200 | 36 | | 51 | 500 | 0.1 | 191.8 |
| 10 | a10 | H | H | Et | 6 | 408 | | 86 | 300 | 246 | 200 | 35 | | 49 | 500 | 0.1 | 165.0 |
| 11 | b1 | Me | H | Me | 2 | 199 | 209 | | 300 | 269 | 200 | | 95 | 112 | 500 | 0.1 | 227.5 |
| 12 | b2 | Me | H | Et | 2 | 341 | | 358 | 300 | 310 | 200 | | | 107 | 500 | 0.1 | 222.4 |
| 13 | b3 | Me | H | Me | 3 | 305 | 160 | | 300 | 266 | 200 | | 72 | 85 | 500 | 0.1 | 218.3 |
| 14 | b4 | Me | H | Et | 3 | 522 | | 274 | 300 | 297 | 200 | | | 84 | 500 | 0.1 | 215.4 |
| 15 | b5 | Me | H | Me | 4 | 349 | 123 | | 300 | 252 | 200 | | 58 | 68 | 500 | 0.1 | 193.6 |
| 16 | b6 | Me | H | Et | 4 | 598 | | 209 | 300 | 276 | 200 | | | 69 | 500 | 0.1 | 201.5 |
| 17 | b7 | Me | H | Me | 5 | 382 | 100 | | 300 | 247 | 200 | | 49 | 57 | 500 | 0.1 | 177.0 |
| 18 | b8 | Me | H | Et | 5 | 653 | | 172 | 300 | 267 | 200 | | | 59 | 500 | 0.1 | 184.9 |
| 19 | b9 | Me | H | Me | 6 | 408 | 86 | | 300 | 246 | 200 | | 42 | 49 | 500 | 0.1 | 165.0 |
| 20 | b10 | Me | H | Et | 6 | 697 | | 147 | 300 | 262 | 200 | | | 51 | 500 | 0.1 | 172.6 |

| | | | | | | | | | | | | | | | | | |
|---|---|---|---|---|---|---|---|---|---|---|---|---|---|---|---|---|---|
| The details of the raw materials in Table 1 are as follows. CANa: sodium monochloroacetate CAMe: methyl chloroacetate CAEt: ethyl chloroacetate NMP: N-methyl-2-pyrrolidone AA: acrylic acid MAA: methacrylic acid TEA: triethylamine MEHQ: 4-methoxyphenol | | | | | | | | | | | | | | | | | |

### <Production Example 21 (Production of Copolymer Solution_A-1)>

Into a four-necked flask equipped with a thermometer, a condenser, a stirrer, and a dropping funnel, 80 g of xylene and 20 g of 1-butanol were charged as solvents, nitrogen gas was introduced, and the mixture was stirred while maintaining the temperature 88°C. Then, a mixed solution of: as the monomer (a), 10 g of the monomer (a-1), 4 g of the monomer (a-3), 1 g of the monomer (a-5), 1 g of the monomer (a-7), and 1 g of the monomer (a-9); as the monomer (b), 33 g of methoxycarbonylmethyl acrylate, 40 g of methyl methacrylate, and 10 g of 2-methoxyethyl acrylate; and as polymerization initiator, 2.0 g of 1,1,3,3-tetramethylbutylperoxy-2-ethylhexanoate (initial addition) was added dropwise over a period of 3 hours while maintaining the temperature at 88°C. Thereafter, after stirring at 88°C for 1 hour, 0.1 g of 1,1,3,3-tetramethylbutylperoxy-2-ethylhexanoate was added 3 times every hour, and after stirring for 2 hours at the same temperature, the mixture was cooled to room temperature to obtain a copolymer solution A-1. The non-volatile matter and Mw of A-1 are shown in Table 2.

### <Production Examples 22 to 27 (Production of Copolymer Solutions A-2 to A-3 and P-1 to P-4)>

Copolymer solutions A-2 to A-3 and P-1 to P-4 were obtained by performing a polymerization reaction in the same manner as in Production Example 21, except that the monomers and solvents shown in Table 2 were used. The non-volatile matter and Mw of each are shown in Table 2. Numerical values in the table are in % by mass.

**[Table 2]**

| Table 2 | | Production Example | | | | | | |
|---|---|---|---|---|---|---|---|---|
| | | 21 | 22 | 23 | 24 | 25 | 26 | 27 |
| Monomer (a) | monomer (a1) | 10 | | | | | | |
| | monomer (a2) | | 12 | 12 | | | | |
| | monomer (a3) | 4 | | | | | | |
| | monomer (a4) | | 5 | 5 | | | | |
| | monomer (a5) | 1 | | | | | | |
| | monomer (a6) | | 1 | 1 | | | | |
| | monomer (a7) | 1 | | | | | | |
| | monomer (a8) | | 1 | 1 | | | | |
| | monomer (a9) | 1 | | | | | | |
| | monomer (a10) | | 1 | 1 | | | | |
| Monomer (b) | monomer (b1) | | | | 8 | | | |
| | monomer (b2) | | | | | 8 | | |
| | monomer (b3) | | | | 2 | | | |
| | monomer (b4) | | | | | 2 | | |
| | monomer (b5) | | | | 1 | | | |
| | monomer (b6) | | | | | 1 | | |
| | monomer (b7) | | | | 1 | | | |
| | monomer (b8) | | | | | 1 | | |
| | monomer (b9) | | | | 1 | | | |
| | monomer (b10) | | | | | 1 | | |
| | methoxycarbonylmethyl | 33 | | | | | | |
| | methoxvcarbonylethyl acrylate | | 40 | 40 | | | | |
| | methoxycarbonylethyl methacrylate | | | | 47 | 47 | | |
| | triisopropylsilyl methacrylate | | | | | | 50 | |
| | methyl methacrylate | 40 | 30 | 40 | 30 | 30 | 10 | 10 |
| | 2-methoxyethyl acrylate | 10 | 10 | | 10 | 10 | | 40 |
| | 2-methoxyethyl methacrylate | | | | | | 30 | |
| | n-butyl acrylate | | | | | | 10 | 50 |
| Total of monomer solid contents | | 100 | 100 | 100 | 100 | 100 | 100 | 100 |
| Solvent | xylene | 80 | 80 | 50 | 100 | 100 | 100 | 100 |
| | 1-butanol | 20 | 20 | | | | | |
| | butyl acetate | | | 50 | | | | |
| Mass ratio(n(2)/n(2 to 10)) | | 0.59 | 0.60 | 0.60 | - - | - | - | - |
| Weight-average molecular weight (Mw) | | 31200 | 31400 | 29900 | 29100 | 29900 | 25500 | 45000 |
| Non-volatile matter (%, 125°C, 1 hour) | | 51.5 | 51.2 | 51.3 | 51.1 | 51.3 | 50.5 | 50.7 |
| Copolymer solution name | | A-1 | A-2 | A-3 | P-1 | P-2 | P-3 | P-4 |

### <Production Example 28 (Production of Gum Rosin Zinc Salt Solution)>

Into a flask equipped with a thermometer, a refluxing condenser, and a stirrer, 240 g of Chinese gum rosin (WW) and 360 g of xylene were added, and 120 g of zinc oxide was further added thereto so that all the resin acids in the rosin form zinc salts, and the mixture was refluxed and dehydrated under reduced pressure at 70 to 80°C for 3 hours. Thereafter, the mixture was cooled and filtered to obtain a xylene solution of rosin zinc salt (dark brown transparent liquid, solid content: 50%). The non-volatile matter of the resulting solution was 50.2%.

### 2. Examples and Comparative Examples (Production of Coating Composition)

The components shown in Tables 3 to 6 were blended in the proportions (% by mass) shown in the tables, and the coating compositions were produced by mixing and dispersing the mixture with glass beads of 1.5 to 2.5 mm in diameter. Examples 6, 7 and 13 are not falling under the protection scope of the present disclosure.

**[Table 3]**

| Table 3 | | Example | | | | | | | | | |
|---|---|---|---|---|---|---|---|---|---|---|---|
| | | 1 | 2 | 3 | 4 | 5 | 6 | 7 | 8 | 9 | 10 |
| Polymer A | copolymer solution A-1 | 25 | | 25 | 30 | | 30 | | 30 | | |
| | copolymer solution A-2 | | 25 | | | | | 25 | | 30 | |
| | copolymer solution A-3 | | | | | 25 | | | | | 30 |
| Antifouling agent B | antifouling agent B1: Econea 28 | | | | | | 4 | 4 | 2 | 2 | 2 |
| | antifouling agent B2: medetomidine | 0.2 | 0.2 | 0.2 | 0.2 | 0.2 | | | 0.2 | 0.2 | 0.2 |
| | cuprous oxide | 40 | 40 | 20 | 20 | 40 | 20 | 20 | 20 | 20 | 20 |
| | copper pyrithione | 3 | 3 | 3 | 3 | 3 | 3 | 3 | 3 | 3 | 3 |
| | Sea Nine | 3 | 3 | 3 | 3 | 3 | 3 | 3 | 3 | 3 | 3 |
| Release modifier | gum rosin zinc salt solution | 6 | | | 6 | 6 | 6 | 6 | 10 | | 10 |
| | gum rosin solution | | 6 | 6 | | | | | | 10 | |
| Pigment | red iron oxide | 2 | 2 | 4 | 4 | 2 | 4 | 4 | 2 | 2 | 2 |
| | talc | 4 | 4 | 6 | 6 | 4 | 6 | 6 | 4 | 4 | 4 |
| | zinc oxide | 4 | 4 | 16 | 16 | 4 | 16 | 16 | 13 | 13 | 13 |
| | titanium oxide | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 |
| | tetraethoxysilane | 0.5 | 0.5 | 0.5 | 0.5 | 0.5 | 0.5 | 0.5 | 0.5 | 0.5 | 0.5 |
| | tricresyl phosphate | 2 | 2 | 2 | 2 | 2 | 2 | 2 | 2 | 2 | 2 |
| Solvent | xylene | 3.3 | 5.3 | 5.3 | 5.3 | 3.3 | 5.3 | 3.3 | 5.3 | 3.3 | 5.3 |
| | 1-butanol | | 1 | 1 | 1 | | 1 | | 1 | | 1 |
| | propylene glycol monomethyl ether | 3 | | | | 3 | | 3 | | 3 | |
| Total | | 100 | 100 | 96 | 101 | 100 | 105 | 100 | 100 | 100 | 100 |
| Test Example Antifouling test | after 15 months | A | A | A | A | A | A | A | A | A | A |
| | after 30 months | A | A | A | A | A | B | B | A | A | A |

**[Table 4]**

| Table 4 | | Example | | | | | | | | | |
|---|---|---|---|---|---|---|---|---|---|---|---|
| | | 11 12 13 14 15 16 17 18 19 20 | | | | | | | | | |
| Polymer A | copolymer solution A-1 | 30 | | 30 | 30 | | 15 | | 25 | | 30 |
| | copolymer solution A-2 | | 30 | | | | | 15 | | 25 | |
| | copolymer solution A-3 | | | | | 25 | | | | | |
| Other polymer P | copolymer solution P-3 | | | | | | 10 | | | | |
| | copolymer solution P-4 | | | | | | | 10 | | | |
| Antifouling agent B | antifouling agent B1: Econea 28 | 4 | 4 | 4 | | | | | | | |
| | antifouling agent B2: medetomidine | 0.2 | 0.2 | | 0.2 | 0.2 | 0.2 | 0.2 | 0.2 | 0.2 | 0.2 |
| | cuprous oxide | | | | | 40 | 40 | 40 | 46 | 43 | |
| | copper pyrithione | 3 | 3 | 3 | 3 | | 3 | 3 | | 3 | 7 |
| | Sea Nine | 3 | 3 | 3 | 3 | 3 | 3 | 3 | | | |
| | Zineb | | | | | 3 | | | | | |
| Release modifier | gum rosin zinc salt solution | 6 | 6 | 6 | 6 | 6 | | 6 | 6 | | 6 |
| | gum rosin solution | | | | | | 6 | | | 6 | |
| Pigment | red iron oxide | 2 | 2 | 4 | 4 | 2 | 2 | 2 | 2 | 2 | 4 |
| | talc | 6 | 6 | 6 | 6 | 4 | 4 | 4 | 4 | 4 | 6 |
| | zinc oxide | 15 | 15 | 16 | 16 | 4 | 4 | 4 | 4 | 4 | 16 |
| | titanium oxide | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 |
| | tetraethoxysilane | 0.5 | 0.5 | 0.5 | 0.5 | 0.5 | 0.5 | 0.5 | 0.5 | 0.5 | 0.5 |
| | tricresyl phosphate | 2 | 2 | 2 | 2 | 2 | 2 | 2 | 2 | 2 | 2 |
| Solvent | xylene | 5.3 | 5.3 | 5.3 | 5.3 | 3.3 | 5.3 | 3.3 | 3.3 | 3.3 | 5.3 |
| | 1-butanol | 1 | 1 | 1 | 1 | | 1 | | | | 1 |
| | propylene glycol monomethyl ether | | | | | 3 | | 3 | 3 | 3 | |
| Total | | 82 | 82 | 85 | 81 | 100 | 100 | 100 | 100 | 100 | 82 |
| Test Example Antifouling test | after 15 months | A | A | A | A | A | A | A | A | A | A |
| | after 30 months | A | A | C | B | A | A | A | A | A | A |

**[Table 5]**

| Table 5 | | Example | | | | | | |
|---|---|---|---|---|---|---|---|---|
| | | 21 22 23 24 25 26 27 | | | | | | |
| Polymer A | copolymer solution A-1 | 30 | | | 30 | | 25 | |
| | copolymer solution A-2 | | 30 | 30 | | 30 | | 25 |
| | copolymer solution A-3 | | | | | | | |
| Antifouling agent B | antifouling agent B1: Econea 28 | 4 | 4 | 4 | 4 | | | |
| | antifouling agent B2: medetomidine | 0.2 | 0.2 | 0.2 | 0.2 | 0.2 | 0.2 | 0.2 |
| | cuprous oxide | | | | | | 43 | 43 |
| | copper pyrithione | 3 | | | | | | |
| | Sea Nine | | | | | 3 | 3 | 3 |
| | Zineb | | 3 | 3 | | | | |
| | zinc pyrithione | | | | 3 | 3 | | |
| | Diuron | | | | | | | 3 |
| Release modifier | gum rosin zinc salt solution | | 6 | 6 | | 6 | 6 | 6 |
| | gum rosin solution | 6 | | | 6 | | | |
| Pigment | red iron oxide | 4 | 4 | 4 | 4 | 4 | 2 | 2 |
| | talc | 6 | 6 | 6 | 6 | 6 | 4 | 2 |
| | zinc oxide | 16 | 16 | 16 | 16 | 16 | 4 | 3 |
| | titanium oxide | 1 | 1 | 1 | 1 | 1 | 1 | 1 |
| Other additives | Disparlon A603-20X | 3 | 3 | 3 | 3 | 3 | 3 | 3 |
| | tetraethoxysilane | 0.5 | 0.5 | 0.5 | 0.5 | 0.5 | 0.5 | 0.5 |
| | tricresyl phosphate | 2 | 2 | 2 | 2 | 2 | 2 | 2 |
| Solvent | xylene | 5.3 | 5.3 | 5.3 | 5.3 | 5.3 | 3.3 | 3.3 |
| | 1-butanol | 1 | 1 | 1 | 1 | 1 | | |
| | propylene glycol monomethyl ether | | | | | | 3 | 3 |
| Total | | 82 | 82 | 82 | 82 | 81 | 100 | 100 |
| Test Example Antifouling test | after 15 months | A | A | A | A | A | A | A |
| | after 30 months | A | A | A | A | A | A | A |

**[Table 6]**

| Table 6 | | Comparative Example | | | | | | | | | |
|---|---|---|---|---|---|---|---|---|---|---|---|
| | | 1 2 3 4 5 6 7 8 9 10 | | | | | | | | | |
| Polymer A | copolymer solution A-1 | 30 | | | | | | | | | |
| | copolymer solution A-2 | | 25 | | | | | | | | |
| Other polymer P | copolymer solution P-1 | | | 25 | | 25 | | | | 25 | |
| | copolymer solution P-2 | | | | 25 | | 25 | | | | 25 |
| | copolymer solution P-3 | | | | | | | 25 | | | |
| | copolymer solution P-4 | | | | | | | | 25 | | |
| Antifouling agent B | antifouling agent B1: Econea28 | | | | | 4 | 4 | | | | |
| | antifouling agent B2: medetomidine | | | 0.2 | 0.2 | | | 0.2 | 0.2 | | |
| | cuprous oxide | 20 | 40 | 40 | 40 | 20 | 20 | 40 | 40 | 40 | 40 |
| | copper pyrithione | 3 | 3 | 3 | 3 | 3 | 3 | 3 | 3 | 3 | 3 |
| | Sea Nine | 3 | 3 | 3 | 3 | 3 | 3 | 3 | 3 | 3 | 3 |
| Release modifier | gum rosin zinc salt solution | 6 | | 6 | 6 | | 6 | | 6 | 6 | |
| | gum rosin solution | | 6 | | | 6 | | 6 | | | 6 |
| Pigment | red iron oxide | 4 | 2 | 2 | 2 | 4 | 4 | 2 | 2 | 2 | 2 |
| | talc | 6 | 8 | 4 | 4 | 6 | 6 | 4 | 4 | 4 | 8 |
| | zinc oxide | 16 | | 4 | 4 | 16 | 16 | 4 | 4 | 4 | |
| | titanium oxide | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 |
| | tetraethoxysilane | 0.5 | 0.5 | 0.5 | 0.5 | 0.5 | 0.5 | 0.5 | 0.5 | 0.5 | 0.5 |
| | tricresyl phosphate | 2 | 2 | 2 | 2 | 2 | 2 | 2 | 2 | 2 | 2 |
| Solvent | xylene | 5.3 | 3.3 | 5.3 | 5.3 | 5.3 | 3.3 | 3.3 | 5.3 | 5.5 | 3.3 |
| | 1-butanol | 1 | | 1 | 1 | 1 | | | 1 | 1 | |
| | propylene glycol monomethyl ether | | 3 | | | | 3 | 3 | | | 3 |
| Total | | 101 | 100 | 100 | 100 | 100 | 100 | 100 | 100 | 100 | 100 |
| Test Example Antifouling test | after 15 months | A | A | B | B | B | B | B | D | A | A |
| | after 30 months | D | E | D | E | E | E | E | E | D | E |

Details of each component in the tables are as follows.

### <Antifouling Agent B>

Econea 28: antifouling agent B1, 2-(p-chlorophenyl)-3-cyano-4-bromo-5-trifluoromethylpyrrole (manufactured by Janssen PMP)
Medetomidine: antifouling agent B2, product name "Selektope" (manufactured by ITEC Co., Ltd.)
Cuprous oxide: product name "NC-301" (manufactured by Nissin Chemco Ltd.)
Copper pyrithione: product name "Copper Omadine" (manufactured by Lonza Group AG)
Sea Nine: SEA-NINE 211N: 4,5-dichloro-2-n-octyl-3-isothiazolone (manufactured by Rohm & Haas, active ingredient 30% xylene solution)
Zineb: [ethylenebis(dithiocarbamate)] zinc (manufactured by Ouchi Shinko Chemical Industrial Co., Ltd.)
Zinc pyrithione: (manufactured by Lonza Group AG)
Diuron: product name "Diuron" (manufactured by Tokyo Chemical Industry Co., Ltd.)

### <Release Modifier>

Gum rosin zinc salt solution: solution produced in Production Example 28 was used.
Gum rosin solution: xylene solution (50% solid content) of Chinese gum rosin (WW)

### <Pigment>

Red iron oxide: product name "BENGARA KINGYOKU" (manufactured by Morishita Red iron oxide Kogyo Co., Ltd.)
Talc: product name "Talc MS" (manufactured by Nippon Talc Co., Ltd.)
Zinc oxide: product name "Zinc Oxide (Type II)" (manufactured by Seido Chemical Industry Co., Ltd.)
Titanium oxide: product name "FR-41" (manufactured by Furukawa Co., Ltd.)

### <Other Additives>

Disparlon A603-20X: aliphatic acid amide thixotropic agent, product name "Disparlon A603-20X" (manufactured by Kusumoto Chemicals, Ltd.)
Tetraethoxysilane: product name "Ethyl Silicate 28" (manufactured by Colcoat Co., Ltd.)
Tricresyl phosphate: (manufactured by Daihachi Chemical Industry Co., Ltd.)

### 3. Evaluation

The coating compositions of Examples and Comparative Examples were subjected to the following test. The results are shown in Tables 3 to 6. As shown in the table, all Examples exhibited better long-term antifouling property than all Comparative Examples. Further, as is clear from the comparison between Examples 13 and 14, the long-term antifouling property was particularly good in the case where the antifouling agent B contained the antifouling agent B2. Furthermore, as is clear from the comparison of Examples 11, 13, and 14, the long-term antifouling property was even better in the case where the antifouling agent B contained both the antifouling agent B1 and the antifouling agent B2. Furthermore, as is clear from the comparison between Examples 4 and 14 and between Examples 6 and 13, the long-term antifouling property was particularly good, also in the case where the antifouling agent B contained the antifouling agent B1 or the antifouling agent B2 and cuprous oxide.

### <Test Example (Antifouling Test)>

Each of the coating compositions obtained in Examples and Comparative Examples was applied onto both sides of a PVC plate (100 × 200 × 2 mm) such that the thickness of the dry coating film was about 300 µm. The resulting coated product was dried at room temperature (25°C) for 3 days to prepare a test plate with a dry coating film having a thickness of about 300 µm. The test plate was immersed 1.5 m below sea level in Nachikatsuura-cho, Wakayama Prefecture, Japan, and fouling of the test plates by adhered materials was observed after 15 months and 30 months.

Evaluation was made in accordance with the following criteria by visual observation of the surface condition of the coating films.
AA: No fouling organisms such as shellfish and algae adhered, and almost no slime
A: No fouling organisms such as shellfish and algae adhered, and slime thinly adhered (to the extent that the coating film surface was visible) but removable by lightly wiping with a brush
B: No fouling organisms such as shellfish and algae adhered, and slime thickly adhered (to the extent that the coating film surface was not visible) but removable by wiping with a brush
C: No fouling organisms such as shellfish and algae adhered, and slime adhered thickly to the extent that the coating film surface was not visible and not removable even by strong wiping with a brush
D: Fouling organisms such as shellfish and algae adhered

## Claims

1. An antifouling coating composition comprising:
a copolymer A; and
an antifouling agent B,
wherein the copolymer A is a copolymer of a monomer (a) and an ethylenically unsaturated monomer (b) other than the monomer (a);
the monomer (a) is represented by general formula (1);
the antifouling agent B comprises an antifouling agent B2; and
the antifouling agent B2 is 4-[1-(2,3-dimethylphenyl)ethyl]-1H-imidazole, 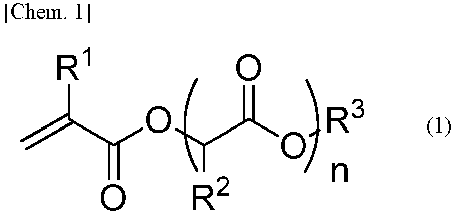
wherein R¹ represents hydrogen, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 2 to 10.

2. The antifouling coating composition of Claim 1, wherein
the antifouling agent B comprises both an antifouling agent B1 and the antifouling agent B2, wherein
the antifouling agent B1 is 2-(p-chlorophenyl)-3-cyano-4-bromo-5-trifluoromethylpyrrole.

3. The antifouling coating composition of Claim 1 or 2, wherein
the antifouling agent B further comprises cuprous oxide.

## Patentansprüche

1. Antifouling-Beschichtungszusammensetzung, umfassend:
ein Copolymer A; und
ein Antifouling-Mittel B,
wobei das Copolymer A ein Copolymer aus einem Monomer (a) und einem ethylenisch ungesättigten Monomer (b) ist, das sich von dem Monomer (a) unterscheidet;
das Monomer (a) durch die allgemeine Formel (1) dargestellt ist;
das Antifouling-Mittel B ein Antifouling-Mittel B2 umfasst; und
das Antifouling-Mittel B2 4-[1-(2,3-Dimethylphenyl)ethyl]-1H-imidazol ist, 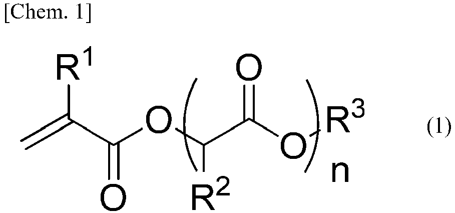
wobei R¹ Wasserstoff darstellt, R² Wasserstoff, eine Methylgruppe oder eine Phenylgruppe darstellt, R³ eine Alkylgruppe mit 1 bis 8 Kohlenstoffatomen ist, die optional mit einer Alkoxygruppe mit 1 bis 8 Kohlenstoffatomen oder einer Phenylgruppe substituiert ist, oder eine Phenylgruppe darstellt, und n eine ganze Zahl von 2 bis 10 darstellt.

2. Antifouling-Beschichtungszusammensetzung nach Anspruch 1, wobei
das Antifouling-Mittel B sowohl ein Antifouling-Mittel B 1 als auch das Antifouling-Mittel B2 umfasst, wobei
das Antifouling-Mittel B1 2-(p-Chlorphenyl)-3-cyano-4-brom-5-trifluormethylpyrrol ist.

3. Antifouling-Beschichtungszusammensetzung nach Anspruch 1 oder 2, wobei
das Antifouling-Mittel B ferner Kupfer(I)-oxid umfasst.

## Revendications

1. Composition de revêtement antisalissure comprenant :
un copolymère A ; et
un agent antisalissure B,
dans laquelle le copolymère A est un copolymère d'un monomère (a) et d'un monomère éthyléniquement insaturé (b) autre que le monomère (a) ;
le monomère (a) est représenté par la formule générale (1) ;
l'agent antisalissure B comprend un agent antisalissure B2 ; et
l'agent antisalissure B2 est le 4-[1-(2,3-diméthylphényl)éthyl]-1H-imidazole, 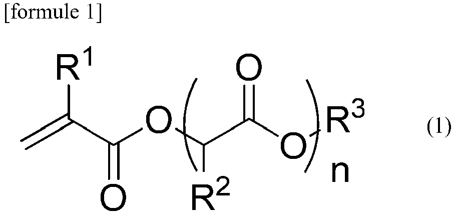
dans laquelle R¹ représente l'hydrogène, R² représente l'hydrogène, un groupe méthyle ou un groupe phényle, R³ est un groupe alkyle ayant de 1 à 8 atomes de carbone éventuellement substitué par un groupe alcoxy ayant de 1 à 8 atomes de carbone ou un groupe phényle, ou représente un groupe phényle, et n représente un nombre entier de 2 à 10.

2. Composition de revêtement antisalissure de la revendication 1, dans laquelle
l'agent antisalissure B comprend à la fois un agent antisalissure B1 et l'agent antisalissure B2, dans lequel
l'agent antisalissure B1 est le 2-(p-chlorophényl)-3-cyano-4-bromo-5-trifluorométhylpyrrole.

3. Composition de revêtement antisalissure de la revendication 1 ou 2, dans laquelle
l'agent antisalissure B comprend en outre de l'oxyde cuivreux.
